(19) Europäisches Patentamt
European Patent Office
Office européen des brevets

(11) **EP 2 699 935 B1**

(12) **EUROPÄISCHE PATENTSCHRIFT**

(45) Veröffentlichungstag und Bekanntmachung des Hinweises auf die Patenterteilung:
**05.08.2015 Patentblatt 2015/32**

(21) Anmeldenummer: **12716353.3**

(22) Anmeldetag: **17.04.2012**

(51) Int Cl.:
**G01S 5/20** *(2006.01)*     **G01S 11/14** *(2006.01)*
**G01S 3/808** *(2006.01)*

(86) Internationale Anmeldenummer:
**PCT/EP2012/056990**

(87) Internationale Veröffentlichungsnummer:
**WO 2012/143348 (26.10.2012 Gazette 2012/43)**

(54) **VERFAHREN UND VORRICHTUNG ZUM BESTIMMEN UND DARSTELLEN VON MÖGLICHEN ZIELPARAMETERN**

METHOD AND DEVICE FOR DETERMINING AND REPRESENTING POSSIBLE TARGET PARAMETERS

PROCÉDÉ ET DISPOSITIF DE DÉTERMINATION ET DE REPRÉSENTATION DE PARAMÈTRES POSSIBLES D'UNE CIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2011 DE 102011018305**

(43) Veröffentlichungstag der Anmeldung:
**26.02.2014 Patentblatt 2014/09**

(73) Patentinhaber: **ATLAS ELEKTRONIK GmbH 28309 Bremen (DE)**

(72) Erfinder: **STEIMEL, Ulrich 28876 Oyten (DE)**

(56) Entgegenhaltungen:
**WO-A1-2009/156337     US-B1- 7 020 046**

EP 2 699 935 B1

**Beschreibung**

Die Erfindung betrifft ein Verfahren zum Bestimmen und Darstellen von möglichen Zielparametern, die durch richtungsselektiven Empfang von Schallwellen der im Oberbegriff von Anspruch 1 genannten Art ermittelt werden, sowie einer entsprechenden Vorrichtung gemäß dem Oberbegriff von Anspruch 9.

Herkömmlicherweise werden von einem Trägerfahrzeug, wie z.B. einem Oberflächenschiff oder einem U-Boot, mittels einer Sonar-Empfangsanlage Schallwellen eines von einem Ziel, z.B. einem Oberflächenschiff oder einem U-Boot, abgestrahlten Zielgeräusches empfangen und Peilwinkel zu diesem Ziel gemessen, um Zielparameter, wie Zielkurs, Zielgeschwindigkeit und Zielentfernung dieses Zieles zu bestimmen. Unter Vorraussetzung einer gleichförmigen Zielbewegung, d.h. das Ziel bewegt sich mit konstantem Kurs und konstanter Geschwindigkeit, wird aus den gemessenen Peilwinkeln unter Berücksichtigung der Eigenposition des Trägerfahrzeugs eine Position des Ziels geschätzt und ein zu dieser geschätzten Position zugehöriger geschätzter Peilwinkel berechnet.

Aus DE 101 29 726 A1 und DE 103 52 738 A1 sind Verfahren zum Bestimmen der Zielparameter bekannt. Dabei wird mittels eines iterativen Rechenverfahrens die Differenz zwischen gemessenen und geschätzten Peilwinkeln über mehrere Verarbeitungszyklen minimiert. Bei Unterschreiten einer Fehlergrenze wird die zugrundeliegende geschätzte Position als Zielposition erkannt, deren Parameter dann auch die gesuchten Zielparameter liefern.

Je nach angewandtem Verfahren werden die Zielparameter nach einem vorbestimmten Optimierungskriterium optimiert. Die erhaltenen Zielparameter gehören somit zu einer gemäß diesem Optimierungskriterium optimierten Lösung, welche früher oder später gegen die tatsächlich richtige Lösung konvergiert.

Diese bekannten Verfahren ermitteln jedoch nur eine Lösung, welche einem Bediener der Sonar-Empfangsanlage angegeben wird. Es handelt sich dabei zwar um diese jeweils beste Lösung, aber wie wahrscheinlich es ist, dass die optimierte Lösung auch die richtige Lösung ist, ist nicht erkennbar.

DE 10 2008 030 053 A1 zeigt ein weiteres Verfahren zum Bestimmen von Zielparametern, welches zu der vermeintlich besten Lösung, d.h. der nach einem vorbestimmten Optimierungskriterium optimierten Lösung, eine Qualitätsangabe zu jedem Zielparameter ermittelt, wobei die Verteilung dieser Qualitätsangabe jedes Zielparameters Aufschluss über die Zuverlässigkeit der optimierten Lösung gibt.

Zum Anzeigen der Lösung wird für jeden Zielparameter der gesamte Lösungsraum in zweioder dreidimensionalen Diagrammen auf einer gesonderten Anzeige dargestellt, d.h. das Qualitätsmaß wird jeweils über alle angenommenen Zielkurse, Zielentfernungen und/oder Zielgeschwindigkeiten aufgetragen.

Dieses Verfahren hat jedoch den Nachteil, dass zusätzliche Anzeigemittel und eine Vielzahl einzelner Diagramme den Bediener einer Sonar-Empfangsanlage möglicherweise überlasten.

Die WO 2009/156337 A1 betrifft ein Verfahren sowie eine Vorrichtung zum passiven Bestimmen von Zielparametern durch richtungsselektiven Empfang von Schallwellen, die von einem Ziel abgestrahlt oder gesendet werden, und zwar mittels einer Anordnung von Wasserschallaufnehmern einer Sonarempfangsanlage aus geschätzten Peilwinkeln, die aus geschätzten Positionen des Ziels ermittelt werden, und von der Anordnung am Messort gemessenen Peilwinkeln, wobei eine Peilwinkeldifferenz zwischen gemessenen und geschätzten Peilwinkeln iterativ minimiert wird und bei Erreichen des Minimums die Zielparameter einer optimierten Lösung für eine Ausgabe von Zielentfernung, Zielposition, Zielkurs, Zielentfernung und/oder Zielgeschwindigkeit liefert und die während jedem Verarbeitungszyklus einer Reihe aufeinander folgender Verarbeitungszyklen aktualisiert wird.

Die US 7,020,046 betrifft eine Möglichkeit der Unterwasser-Zielverfolgung mit einer Gitter-Suchtechnik, welche eine Parameterauswertungdarstellung verwendet. Diese Suchtechnik umfasst die Verarbeitung akustischer Sonarmessungen in Verbindung mit zusätzlichen Bewegungs- und Umweltinformationen.

Der Erfindung liegt das Problem zugrunde, eine vereinfachte Visualisierung von möglichen Zielparametern zu schaffen, welche zudem die Zuverlässigkeit der möglichen Zielparameter anzeigt.

Die Erfindung löst dieses Problem mit einem Verfahren gemäß Anspruch 1 sowie mit einer Vorrichtung gemäß Anspruch 9.

Entsprechend den eingangs beschriebenen herkömmlichen Verfahren zum Ermitteln der nach einem vorbestimmten Optimierungskriterium optimierten Lösung für Zielparameter, insbesondere eine Zielentfernung, einen Zielkurs und/oder eine Zielgeschwindigkeit, werden Zielbahnen für eine Vielzahl möglicher Lösungen für die zu bestimmenden Zielparameter berechnet. Diese Zielbahnen beginnen an einem zu einem ersten gemessenen Peilwinkel zugehörigen ersten Peilstrahl und enden an einem zum zuletzt gemessenen Peilwinkel zugehörigen letzten Peilstrahl, wobei es sich stets um den jeweils ersten und letzten Peilstrahl einer zusammenhängenden Reihe gemessener Peilwinkel handelt. Somit weisen die Zielbahnen eine zugehörige Anfangsentfernung, insbesondere eine Startentfernung, zum Ziel auf, die auf einem ersten Peilstrahl liegt, und eine zugehörige Endentfernung, insbesondere eine aktuelle Entfernung, die auf einem letzten zur Bestimmung der Zielparameter herangezogenen Peilstrahl liegt.

Für jede Zielbahn wird eine zugehörige Qualitätsangabe, insbesondere ein Qualitätsmaß oder ein inverses und/oder auf 1 normiertes Qualitätsmaß, aus angenommenen Peilwinkeln und den gemessenen Peilwinkeln berechnet. Es handelt sich dabei um eine die Güte der Zielbahn angebende Qualitätsangabe, die den Grad der Übereinstimmung zwischen der angenommenen Zielbahn und der tatsächlichen Zielbahn angibt. Es ergibt sich für die verschiedenen zu einer Zielbahn zugehörigen möglichen Zielparameter eine jeweils andere Verteilung der Qualitätsangabe, da die Qualitätsangabe für die einzelnen Zielbahnen unterschiedlich ist. In diesen zielparameterabhängigen Verteilungen befindet sich auch die Qualitätsangabe für die aus dem Optimierungsverfahren erhaltene optimierte Lösung. Zu dieser gemäß dem verwendeten Optimierungsverfahren optimierten Lösung gehören die erhaltenen Zielparameter, wie die Zielentfernung, der Zielkurses und die Zielgeschwindigkeit. Diese Lösung wird während jedem Verarbeitungszyklus mit jeder neuen Peilwinkelmessung aktualisiert und im Allgemeinen stetig verbessert.

Bevorzugt wird die Qualitätsangabe mittels eines Qualitätsmaßes angegeben, welches aus der Summe der, insbesondere gewichteten, Quadrate der Differenzen für die entlang der Zielbahn angenommenen Peilwinkel und der zugeordneten gemessenen Peilwinkel berechnet wird. Dabei lässt sich das Qualitätsmaß mittels folgender Formel angeben:

$$Q_{(i,j)} = \sum_{k=1}^{n} W_k \cdot \left[ B_{meas,k} - B_{est(i,j),k} \right]^2$$

Dabei bezeichnet Q(i, j) das Qualitätsmaß für eine angenommene Zielbahn Z(i, j) mit einer zum Anfangspunkt der Zielbahn gehörenden Anfangsentfernung $R_0(i, j)$ und mit einer Entfernung zum Endpunkt der Zielbahn $R_n(j)$. Der Index k läuft von 1 bis n, wobei n die Anzahl gemessener Peilwinkel $B_{meas, k}$ bzw. angenommener Peilwinkel $B_{est, k}$ längs der Zielbahn angibt. $W_k$ bezeichnet Gewichtsfaktoren, welche bspw. der bei einer Vorfilterung ermittelten inversen Standardabweichung der gemessenen Peilwinkel $B_{meas, k}$ entsprechen. $B_{est(i, j), k}$ bezeichnet den angenommenen Peilwinkel des k-ten Peilstrahls für die Zielbahn Z(i, j).

Für die Ermittlung der Qualitätsangabe kann darüber hinaus die Berechnung des o.g. Qualitätsmaßes bei Verwendung von Stützwerten zur Durchführung des Optimierungsverfahrens, die die Konvergenz des Optimierungsverfahrens fördern, entsprechend dieser verwendeten Stützwerte angepasst werden. Die Formel für das Qualitätsmaß unter Verwendung von Stützwerten für die Entfernung lautet dann:

$$Q_{(i,j)} = \sum_{k=1}^{n} W_k \cdot \left[ B_{meas,k} - B_{est(i,j),k} \right]^2 + W_R \left( R_{sub} - R_{n(i,j)} \right)^2$$

Dabei bezeichnet $R_n(i, j)$ die Entfernung zur Zeit $t_n$ von der Zielbahn Z(i, j) und $W_R$ einen Gewichtsfaktor.

Die Erfindung ist jedoch nicht auf die Berücksichtigung von Entfernungsstützwerten beschränkt. Vielmehr sind weitere Stützwerte wie bspw. Geschwindigkeits- und Kursstützwerte zur Berücksichtung bei der Berechnung des Qualitätsmaßes möglich. Ferner können als weitere Stützwerte eine Radialgeschwindigkeit sowie eine Sendefrequenz herangezogen werden. Auch eine zeitgleiche Verwendung von mehreren verschiedenen Stützwerten ist denkbar.

Ebenso ist jedwedes andere Maß, welches sich bspw. mittels Logarithmierung, Radizierung, Quadrierung, Potenzierung, etc. aus dem o.g. Qualitätsmaß berechnen lässt, einsetzbar als Qualitätsangabe.

Alternativ kann die Qualitätsangabe auch aus der Summe der, insbesondere gewichteten, Quadrate der Differenzen aus gemessenen Peilwinkeln und angenommenen Peilwinkeln berechnet werden, die mit der kleinsten dieser Summe aller angenommenen Zielbahnen multipliziert wird. D.h. statt des Qualitätsmaßes Q(i, j) gemäß o.g. Formel werden die inversen und auf das Intervall zwischen 0 und 1, d.h. auf [0, 1] normierten Qualitätsmaße verwendet. D.h. Q(i, j) wird hierbei ersetzt durch $Q_{inv}(i, j) = \min(Q)/Q(i, j)$.

Durch die Verteilung der Qualitätsangabe erhält ein Bediener der Sonar-Empfangsanlage Informationen über die Zuverlässigkeit der ausgegeben optimierten Lösung. Um den Bediener zu entlasten, werden erfindungsgemäß mittels eines Lösungsraummoduls auf einer Anzeigevorrichtung, insbesondere auf einem Lage-Display, die möglichen Zielparameter in einem Lösungsraum graphisch und/oder numerisch dargestellt.

Die Erfindung weist dazu eine Berechnungseinheit auf, in der vorteilhafterweise zu allen Zielbahnen oder zu einer Vielzahl von Zielbahnen vorausschauend für einen festgelegten zukünftigen Zeitpunkt eine zukünftige Zielposition des Zieles ermittelt wird, wobei diese zukünftige Zielposition aus den zu der jeweiligen Zielbahn zugehörigen Zielparametern, insbesondere Zielkurs und Zielgeschwindigkeit, für einen vorbestimmten Zeitraum ermittelt wird. Die Erfindung ist jedoch nicht auf zukünftige Zeitpunkte zur Ermittlung der Zielpositionen beschränkt. Vielmehr lassen sich derartige Zielpositionen auch mittels Zielparameter bestimmen, welche zu vergangenen Peilmessungen ermittelt wurden. Der Vorteil der erfindungsgemäßen Ermittlung der zukünftigen Zielpositionen liegt darin, dem Bediener anzuzeigen, welche möglichen Lösungen die bis jetzt vorliegenden Peilungen zulassen und speziell, wie zuverlässig die beste Lösung ist.

Eine Darstellungseinheit ermittelt dann aus den von der Berechnungseinheit ermittelten zukünftigen Zielpositionen zusammen mit den zu den jeweiligen Zielbahnen zugehörigen Qualitätsangaben ein zukünftiges Erwartungsgebiet. Ferner dient die Darstellungseinheit dazu, das zukünftige Erwartungsgebiet auf einer Anzeigevorrichtung graphisch und/oder numerisch darzustellen.

Eine weitere Berechnungseinheit ermittelt aus allen Zielbahnen oder einer Vielzahl von Zielbahnen einen Entfernungslösungsraum. Dieser Entfernungslösungsraum weist zu der jeweiligen darzustellenden Zielbahn eine zugehörige Anfangsentfernung zum Ziel, eine Endentfernung zum Ziel sowie die zugehörigen Qualitätsangaben dieser Entfernungen auf und zeigt somit die möglichen Lösungen für die Zielentfernung an.

Ein Lösungsraummodul ermittelt anschließend einen Lösungsraum zum Darstellen der möglichen Zielparameter, wobei dieser Lösungsraum das zukünftige Erwartungsgebiet, den Entfernungslösungsraum und/oder die beste Zielbahn aufweist. Das Lösungsraummodul dient dazu, den Lösungsraum auf einer Anzeigevorrichtung graphisch und/oder numerisch, insbesondere in Form einer PPI-Darstellung (Plan-Position-Indicator - Darstellung), darzustellen.

Der Vorteil der Erfindung liegt darin, einem Bediener der Sonaranlage die Bedienung zu erleichtern, indem die zu bestimmenden Zielparameter mit einer optimierten besten Lösung direkt in einem einzigen Lösungsraum bzw. in einer einzigen Darstellung zusammen mit den zugehörigen Qualitätsangaben vorzugsweise in der gewohnten Lage-Darstellung graphisch visualisiert werden.

Gemäß einer weiteren Ausführungsform der Erfindung werden für die Ermittlung des Lösungsraumes nur diejenigen Zielbahnen berücksichtigt, deren zugehörige Qualitätsangaben, insbesondere Qualitätsmaße oder invertierte und/oder normierte Qualitätsmaße, einen vorbestimmten Schwellenwert überschritten haben, da nur diese Zielbahnen potentiell als Lösung relevant sind. Um den Bediener der Sonar-Empfangsanlage zu entlasten, wird vorteilhafterweise der Lösungsraum anhand der Qualitätsangabe weiter gegliedert. Werden bspw. die Qualitätsmaße entsprechend verschiedener Schwellenwerte farblich kodiert, so lassen sich Unsicherheiten bei der Bestimmung der Zielparameter direkt aus der Darstellung des Lösungsraumes ablesen. Dabei ist jedoch zu beachten, dass die schlechtesten Lösungen zuerst und die besten Lösungen zuletzt dargestellt werden, um zu vermeiden, dass bspw. in einem PPI-Diagramm, die guten Lösungen mit einem eine höhere Qualität anzeigendem Qualitätsmaß nachträglich von den schlechten Lösungen, die eine geringe Qualität aufweisen, teilweise überdeckt werden.

Bei einer weiteren bevorzugten Ausführungsform der Erfindung werden aus den zu den Zielbahnen zugehörigen Zielparametern Vektoren ermittelt, deren Endpunkte als zukünftige Zielpositionen das zukünftige Erwartungsgebiet darstellen. Die Startpunkte dieser Vektoren liegen innerhalb des Entfernungslösungsraumes, vorzugsweise auf dem ersten oder letzten Peilstrahl, und die Richtungen und Längen der Vektoren werden anhand der möglichen Lösungen für Zielkurs und Zielgeschwindigkeit ermittelt. Dies ermöglicht vorteilhaft die Darstellung von zukünftigen Zielpositionen als zukünftiges Erwartungsgebiet innerhalb des Lösungsraumes, wobei diese Darstellung punktförmig oder richtungsorientiert, insbesondere als Pfeil mit Pfeilspitze, erfolgt.

Gemäß einer bevorzugten Ausführungsform der Erfindung wird aus den zu der besten Zielbahn zugehörigen Zielparametern ein Vektor ermittelt, welcher im Lösungsraum graphisch, insbesondere als Pfeil mit Pfeilspitze, dargestellt wird. Vorzugsweise wird dieser Vektor optisch hervorgehoben, z.B. in einer anderen Farbe, so dass ein Bediener die beste Lösung vorteilhafterweise sofort wahrnehmen kann.

Bei einer weiteren bevorzugten Ausführungsform der Erfindung werden Rand-Trajektorien der zu bestimmenden Zielparameter ermittelt und zum besseren Visualisieren des Lösungsraumes als zusätzliche Geraden, innerhalb des Lösungsraumes dargestellt. Das hat den Vorteil, die evtl. bestehenden Unsicherheiten der Lösung, insbesondere für den Zielkurs und die Zielgeschwindigkeit, besser zu verdeutlichen.

Die Darstellung dieser Rand-Trajektorien erfolgt vorzugsweise nur, solange die Verteilung der Qualitätsangaben der einzelnen Zielparameter eine vorbestimmte Breite nicht unterschritten hat, d.h. die Zuverlässigkeit der optimierten Lösung gering ist, da die Darstellung des Lösungsraumes sonst unübersichtlich wird.

Vorteilhafterweise lassen sich die Rand-Trajektorien beliebig nach Bedarf manuell oder automatisch bei Über- und/oder Unterschreiten vorbestimmter Schwellenwerte für die jeweiligen Extremwerte für Zielkurs, Zielentfernung und/oder Zielgeschwindigkeit ein- und ausblenden.

Gemäß einer weiteren bevorzugten Ausführungsform der Erfindung werden die jeweiligen Extremwerte für Zielkurs, Zielentfernung und/oder Zielgeschwindigkeit, zusätzlich zur graphischen Darstellung des Lösungsraumes numerisch ausgegeben. Das hat den Vorteil, die Zuverlässigkeit der einzelnen Zielparameter, insbesondere für einen Zielkurs und eine Zielgeschwindigkeit, zu verdeutlichen auch für die Fälle, in denen die entsprechende Darstellung des Lösungsraumes die zugehörige Zuverlässigkeit der optimierten Lösung nicht genau erkennen lässt.

Bei einer weiteren bevorzugten Ausführungsform der Erfindung wird mittels einer Gegenkursberechnungseinheit eine potentielle Gegenkurslösung ermittelt. Dazu wird der zur besten Zielbahn zugehörige Wert des Zielkurses ermittelt, um daraus einen entsprechenden Gegenkurs sowie ein den Gegenkurs umspannendes Gegenkursgebiet zu berechnen. Anschließend wird eine beste Gegenkurslösung angebende Zielbahn, die innerhalb des Gegenkursgebietes liegt, sowie ein zu dieser Zielbahn zugehöriger Vektor ermittelt, wobei der Vektor graphisch und/oder numerisch im Lösungsraum erkennbar dargestellt wird, z.B. durch die Darstellung in einer anderen Farbe.

Bevorzugt werden auch bei der Ermittlung von Gegenkurslösungen nur diejenigen Zielbahnen berücksichtigt, deren Qualitätsangaben, insbesondere die inversen und/oder auf 1 normierten Qualitätsmaße, einen vorbestimmten Schwellenwert überschritten haben.

Herkömmliche Verfahren zum Ermitteln der nach einem vorbestimmten Optimierungskriterium optimierten Lösung für Zielparameter können bei kleinerem Start-Lagewinkel zwischen Eigenboot und Ziel, insbesondere einem Start-Lagewinkel von z.B. 0°, lange keine zuverlässigen Angaben machen, ob das Ziel an- oder abläuft. Daher existieren der anlaufende Kurs und sein Gegenkurs als potentielle Lösungen. Eine entsprechende Darstellung dieses Gegenkurses veranschaulicht dem Bediener vorteilhafterweise diese potentielle Gegenkurssituation.

Eine weitere Ausführungsform der Erfindung stellt die zukünftigen Zielpositionen für eine Mehrzahl der möglichen Zielbahnen innerhalb des zukünftigen Erwartungsgebietes in dem Lösungsraum graphisch und/oder numerisch dar, insbesondere als Pfeilspitzen, für den Fall, dass eine potentielle Gegenkurslösung existiert. Durch die Darstellung vieler an- und ablaufender Lösungen werden die Unsicherheiten einer Gegenkurssituation vorteilhaft einem Bediener visuell verdeutlicht.

Eine weitere Ausführungsform der Erfindung zeigt die Ermittlung eines zusätzlichen Gegenkursgebietes für den Fall, dass eine beste Gegenkurslösung existiert. Dabei ist das zusätzliche Gegenkursgebiet kleiner bzw. enger als das zuvor ermittelte Gegenkursgebiet.

Vorzugsweise werden die Zielpositionen des zukünftigen Erwartungsgebietes im Lösungsraum graphisch, insbesondere als Pfeilspitzen, und/oder numerisch dargestellt, für den Fall, dass die beste Lösung aus dem zuvor ermittelten Gegenkursgebiet auch in dem etwas enger gefassten zusätzlichen Gegenkursgebiet existiert.

Bei einer weiteren Ausführungsform der Erfindung wird die Darstellung des Lösungsraumes während jedem Verarbeitungszyklus einer Reihe aufeinanderfolgender Verarbeitungszyklen aktualisiert. Gemäß der eingangs beschriebenen herkömmlichen Verfahren konvergiert die als jeweils beste Lösung bestimmte Lösung früher oder später gegen die tatsächlich richtige Lösung. Um dies zu verdeutlichen wird die Darstellung des Lösungsraumes vorteilhafterweise ständig aktualisiert, so dass sowohl der Entfernungslösungsraum als auch das zukünftige Erwartungsgebiet immer weiter eingeschränkt werden.

Weitere bevorzugte Ausführungsformen ergeben sich aus den Unteransprüchen sowie aus den anhand der beigefügten Zeichnung näher erläuterten Ausführungsbeispielen gemäß der Erfindung. In der Zeichnung zeigen:

Fig. 1    eine schematische Darstellung eines möglichen Szenariums mit n Peilstrahlen von einem Wasserfahrzeug zu einem Ziel,

Fig. 2    eine schematische Darstellung von zwei Peilstrahlen mit einer Vielzahl möglicher Zielbahnen,

Fig. 3    ein Blockschaltbild zur Erläuterung des Verfahrens,

Fig. 4A-D    die schematische Darstellung des Lösungsraumes zu verschiedenen Verarbeitungszyklen,

Fig. 5    eine schematische Darstellung eines Lösungsraumes mit zusätzlichen Rand-Trajektorien,

Fig. 6    eine schematische Darstellung eines möglichen Szenariums mit n Peilstrahlen von einem Wasserfahrzeug zu einem Ziel unter einem Start-Lagewinkel von 0 Grad und

Fig. 7    die schematische Darstellung des Lösungsraumes zu der o.g. Gegenkurssituation.

An Bord eines Wasserfahrzeugs, insbesondere eines U-Bootes, befindet sich wenigstens eine Anordnung mit einer Vielzahl von Wasserschallaufnehmern einer Sonar-Empfangsanlage.

Dies können bspw. eine Zylinderbasis im Bug des Wasserfahrzeugs und/oder jeweils eine Linearantenne an der Längsseite des Wasserfahrzeugs und/oder eine Schleppantenne hinter dem Wasserfahrzeug sein.

Die Sonar-Empfangsanlage fasst die Empfangssignale der Wasserschallaufnehmer zu Gruppensignalen benachbarter Richtcharakteristiken mittels eines Richtungsbildners zusammen. Dazu werden die Empfangssignale der Wandler entsprechend ihrer Anordnung laufzeit- und/oder phasenverzögert zu Gruppensignalen aufaddiert.

Den Gruppensignalen sind dann in Abhängigkeit der jeweiligen Zeitverzögerungen Peilwinkel zugeordnet, wobei aus Pegelverläufen der Gruppensignale über die Peilwinkel die eingangs genannten gemessenen Peilwinkel zu Zielen ermittelt werden.

Des Weiteren verfügt eine derartige Sonar-Empfangsanlage über einen Schätzfilter zum Bestimmen von Zielparametern aus den gemessenen Peilwinkeln zu einem Ziel. Bei vorzugsweise konstanter Fahrt des Wasserfahrzeugs längs seiner Bewegungsbahn, dem sog. Eigenleg, werden von diesem Wasserfahrzeug aus Peilwinkel zum Ziel gemessen, während sich das Ziel mit konstanter Geschwindigkeit von einer ersten Zielposition zu einer zweiten Zielposition bewegt.

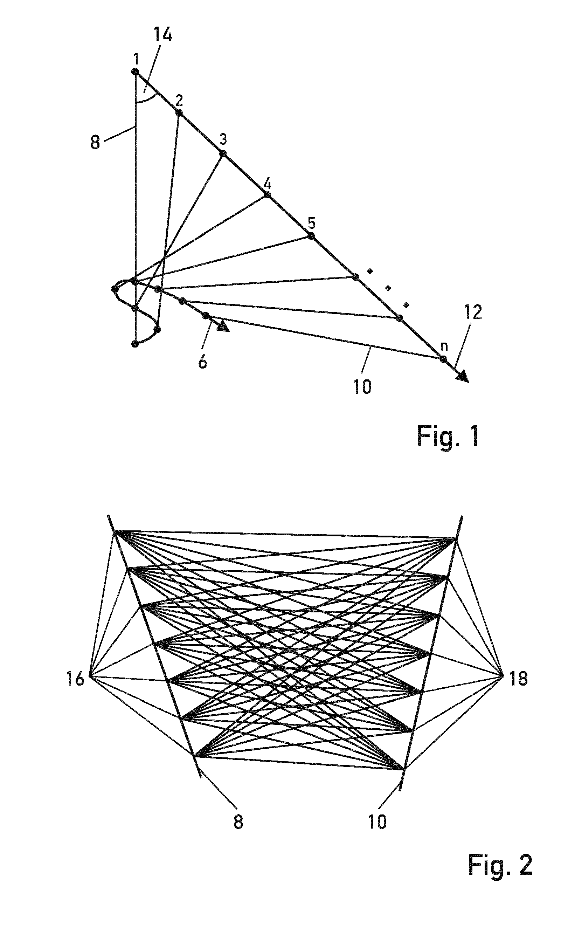

Fig. 1 zeigt ein mögliches Szenarium, bei dem sich das Wasserfahrzeug mit einer Sonar-Empfangsanlage längs einer Bewegungsbahn 6, auch Eigenleg genannt, fährt und n Peilungen zu einem Ziel aufnimmt, welches sich von einem ersten Peilstrahl 8 über weitere Peilstrahlen zum n-ten Peilstrahl 10 längs einer Zielbahn 12 bewegt. Dabei weisen das Wasserfahrzeug und das Ziel zu Messbeginn einen Start-Lagewinkel 14 von ca. 45° auf.

Fig. 2 zeigt eine schematische Darstellung von zwei Peilstrahlen 8, 10 mit einer Vielzahl möglicher Zielbahnen. Zur Bestimmung von Zielparametern, wie ein Zielkurs C, eine Zielentfernung R und eine Zielgeschwindigkeit V, werden eine Mehrzahl von Positionen 16 auf dem ersten Peilstrahl 8 sowie eine Mehrzahl von Positionen 18 auf dem letzten Peilstrahl 10 gewählt. Diese Positionen entsprechen Anfangs- bzw. Endpositionen möglicher Zielbahnen $Z(i, j)$, wobei der Index i eine Position 16 auf dem ersten Peilstrahl 8 und der Index j eine Position 18 auf dem letzten Peilstrahl 10 bezeichnet. Bei dem ersten Peilstrahl 8 und dem letzten Peilstrahl 10 handelt es sich jeweils um den ersten bzw. letzten zur Bestimmung der Zielparameter herangezogenen Peilstrahl aus einer Vielzahl von Peilungen. Sie werden automatisch oder manuell durch Bedienereingriff festgelegt

Zu jeder dieser möglichen Zielbahnen $Z(i, j)$ wird eine Qualitätsangabe ermittelt. Diese Qualitätsangabe kann bspw. in Form eines Qualitätsmaßes $Q(i, j)$ dargestellt werden, welches aus den Differenzen zwischen den gemessenen Peilwinkeln und den zugehörigen angenommenen Peilwinkeln berechnet wird. Die Berechnung erfolgt vorzugsweise gemäß der Formel

$$Q_{(i, j)} = \sum_{k=1}^{n} W_k \cdot \left[ B_{meas,k} - B_{est(i,j),k} \right]^2$$

Dabei bezeichnet $Q(i, j)$ das Qualitätsmaß für eine angenommene Zielbahn $Z(i, j)$. Der Index k läuft dabei von 1 bis n, wobei n die Anzahl der Peilwinkel längs der Zielbahn angibt. $W_k$ bezeichnet Gewichtsfaktoren, um die gemessenen Peilwinkel $B_{meas,k}$ entsprechend ihrer Genauigkeit zu gewichten.

Die Erfindung ist jedoch nicht auf die Anwendung o.g. Formel für die Berechnung der Qualitätsmaße $Q(i, j)$ beschränkt. Vielmehr sind weitere Methoden zur Berechnung denkbar, bei denen auch weitere Daten berücksichtigt werden, wie bspw. die gemessene Frequenz.

Dabei ist es ebenso denkbar, statt des oben angegebenen Wertes von $Q(i, j)$ als Qualitätsmaß den inversen und auf 1 normierten Wert von $Q(i, j)$ zu verwenden, nämlich $Q_{inv}(i' j)$. Vorzugsweise wird zu jeder Zielbahn $Z(i, j)$ eine Qualitätsangabe berechnet, welche angibt, mit welcher Qualität die Zielbahn als mögliche Lösung für die gesuchte Zielbahn in Frage kommt. Die rechnerisch beste Lösung ergibt sich dann für die Zielbahn $Z(i, j)$, für die $Q_{inv}(i' j)=1$ ist.

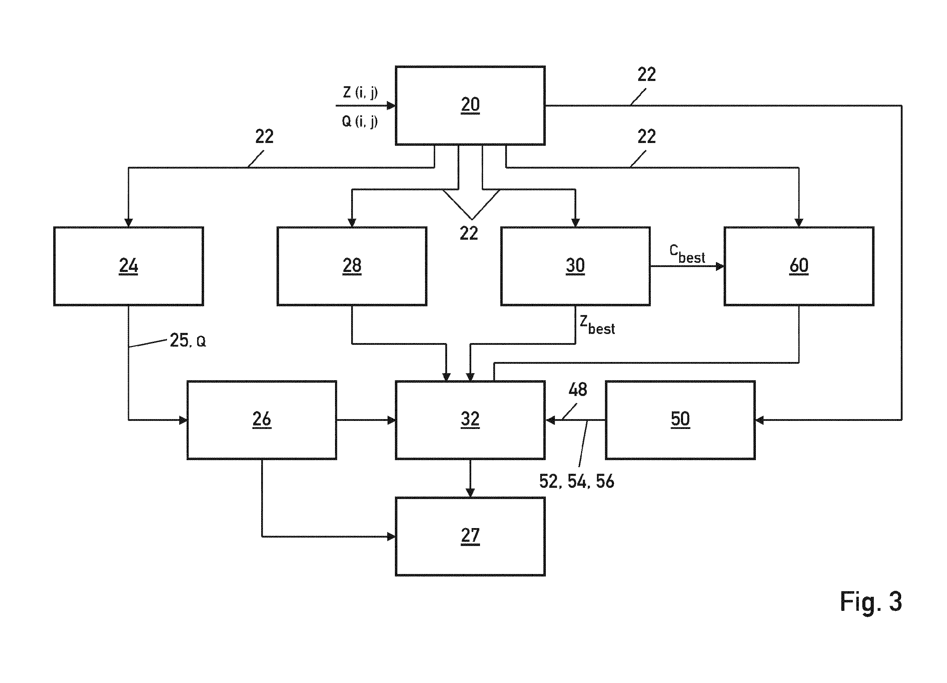

Fig. 3 zeigt ein Blockschaltbild zur Erläuterung des Verfahrens zum Bestimmen und Darstellen von möglichen Zielparametern. Zunächst werden die ermittelten möglichen Zielbahnen $Z(i, j)$ zusammen mit den zugehörigen Qualitätsangaben einem Schwellenwertdetektor 20 übergeben. Dieser gruppiert die Zielbahnen $Z(i, j)$ entsprechend der Qualitätsangaben derart, dass eine Kodierung, insbesondere eine Farbkodierung aufgrund verschiedener Schwellenwerte für die Qualität erfolgt. Es werden vorzugsweise nur diejenigen Zielbahnen $Z(i, j)$ berücksichtigt, deren Qualitätsmaße $Q_{inv}(i' j)$ wenigstens einen vorbestimmten Schwellenwert überschritten haben, da nur diese die potentiell in Frage kommende Lösung darstellen. Neben der Qualitätsangabe sind jeder Zielbahn $Z(i, j)$ eine Anfangsentfernung $R_0$, eine Endentfernung $R_n$, insbesondere eine aktuelle Entfernung, ein Kurs C und eine Geschwindigkeit V zugeordnet, wobei $R_0$ eine zum Anfangspunkt der Zielbahn gehörende Anfangsentfernung auf dem ersten Peilstrahl 8 und $R_n$ eine Endentfernung zum Endpunkt der Zielbahn auf dem letzten Peilstrahl 10 darstellen.

Die entsprechend den Schwellenwerten gefilterten Werte 22 für die möglichen Zielparameter werden einer Berechnungseinheit 24 zur Ermittlung zukünftiger Zielpositionen 25, z. B. die Zielpositionen in 5 Minuten, übergeben. Es werden aus den Werten für Kurs C und Geschwindigkeit V Vektoren berechnet, insbesondere Kurs-/Geschwindigkeitsvektoren, deren Endpunkte mögliche zukünftige Zielpositionen 25 darstellen. Anhand dieser ermittelten zukünftigen Zielpositionen 25 wird zusammen mit den Qualitätsangaben in einer Darstellungseinheit 26 ein zukünftiges Erwartungsgebiet ermittelt, welches aufgrund der gefilterten Eingangswerte 22 entsprechend der Schwellenwerte farblich kodiert auf einer Anzeigevorrichtung 27 darstellbar ist. So kann bspw. derjenige Bereich des zukünftigen Erwartungsgebietes deren zugehörige Zielpositionen 25 eine Qualität $Q_{inv}$ größer als ein oberer Wert aufweisen in einer ersten Farbe, derjenige Bereich des zukünftigen Erwartungsgebietes deren zugehörige Zielpositionen 25 eine Qualität $Q_{inv}$ unterhalb eines weiteren Wertes aufweisen in einer zweiten Farbe und der dazwischen liegende Bereich in einer dritten Farbe dargestellt werden. Die Zahl der Farbkodierung ist jedoch nicht auf drei beschränkt, sondern kann auch größere oder kleinere Werte annehmen. Ferner kann eine entsprechende Kodierung über Grauabstufungen oder verschiedene Muster erfolgen.

Die entsprechend den Schwellenwerten im Schwellenwertdetektor 20 gefilterten Werte 22 für die Anfangsentfernung $R_0$ und die Endentfernung $R_n$ der gefilterten Zielbahnen $Z(i, j)$ werden zusammen mit den Qualitätsangaben einer weiteren Berechnungseinheit 28 übergeben. Anhand eines ersten zur Bestimmung der Zielparameter herangezogenen ersten Peilstrahls 8 und anhand eines zur Bestimmung der Zielparameter zuletzt herangezogenen letzten Peilstrahls 10 werden die möglichen Zielentfernungen der Anfangsentfernung $R_0$ und die möglichen Zielentfernungen zur Endentfernung $R_n$ als Entfernungslösungsraum festgelegt. Auch hier kann zur besseren Visualisierung des Entfernungslösungsraumes eine farbliche Kodierung in Abhängigkeit der jeweiligen zu der jeweiligen Zielentfernung zugehörigen Qualitätsangabe, insbesondere $Q_{inv}$, vorgenommen werden. Ferner ist auch hier eine entsprechende Kodierung über Grauabstufungen oder verschiedene Muster möglich.

Eine Zielbahnberechnungseinheit 30 ermittelt aus den gefilterten Werten 22, insbesondere den potentiell möglichen Zielbahnen Z(i, j), anhand der Qualitätsangaben eine beste Zielbahn $Z_{best}$ mit dem eine maximal zu erreichende Qualität anzeigenden Qualitätsmaß Q(i, j) bzw. $Q_{inv}$(i, j). Dabei liegt die beste Zielbahn $Z_{best}$ vorzugsweise dort, wo das Qualitätsmaß Q minimal bzw. das invertierte und auf 1 normierte Qualitätsmaß $Q_{inv}$ annähernd 1 ist.

Ein Lösungsraummodul 32 ermittelt dann aus den Ausgangsdaten der weiteren Berechnungseinheit 28, den Ausgangsdaten der Darstellungseinheit 26 und den Ausgangsdaten der Zielbahnberechnungseinheit 30 einen gemeinsamen Lösungsraum, welcher in einer Darstellung, insbesondere einer PPI-Darstellung, das zukünftige Erwartungsgebiet, den Entfernungslösungsraum und/oder die beste Zielbahn $Z_{best}$ in einem Lösungsraum auf einem Anzeigemittel visualisiert. Dabei erfolgt die Darstellung des Lösungsraumes über wenigstens ein Darstellungssignal zum Ansteuern einer Anzeigevorrichtung 27.

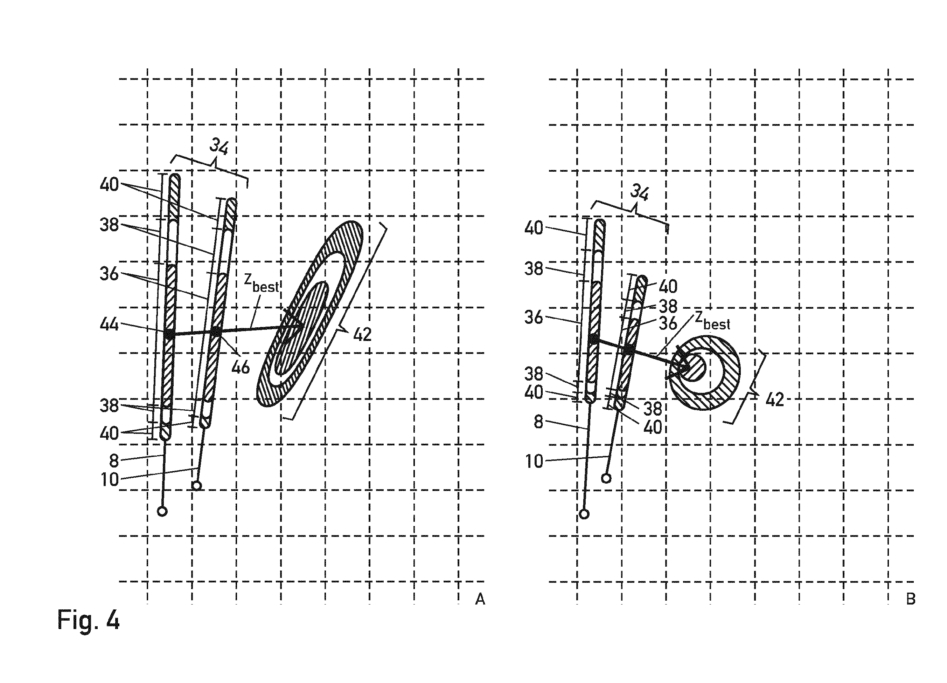

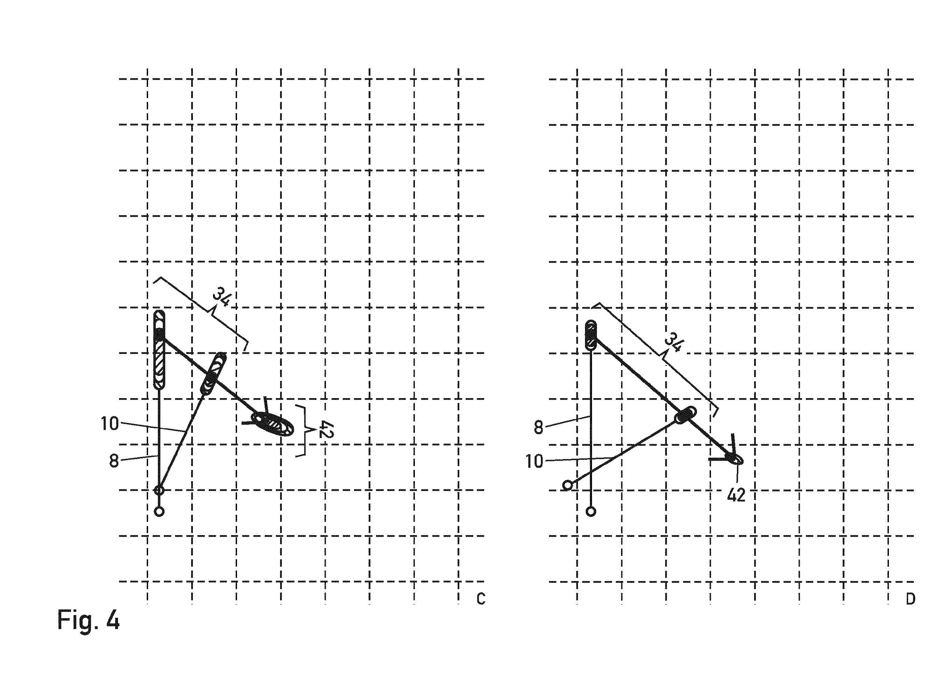

Die Fig. 4A-D zeigen eine schematische Darstellung des Lösungsraumes des in Fig. 1 gezeigten Szenariums in einer Lage-Darstellung. Zusätzlich zum Lösungsraum sind in den Fig.4A-D jeweils der erste Peilstrahl 8 und letzte Peilstrahl 10 dargestellt. Auf dem ersten Peilstrahl 8 werden mögliche Zielpositionen zur Startentfernung $R_0$ abgebildet und auf dem letzten Peilstrahl 10 mögliche Zielpositionen zur Endentfernung $R_n$.

Die möglichen Zielpositionen auf den beiden Peilstrahlen 8, 10 werden entsprechend der Gruppierung des Schwellenwertdetektors 20 gemäß ihrer Qualitätsangaben in verschieden Bereiche unterteilt. Es entsteht somit ein Entfernungslösungsraum 34, welcher für jede angenommene Lösung $R_0$, $R_n$ oder jede Zielbahn Z(i, j), welche ein Mindestmaß an Qualität besitzt, das zugehörige Qualitätsmaß $Q_{inv}$ veranschaulicht. So existiert bspw. ein Bereich 36 des Entfernungslösungsraumes 34 mit Lösungen von besonders hoher Qualität, ein Bereich 40 mit einem eine Mindestqualität anzeigendem Qualitätsmaß sowie ein mittlerer Bereich 38 dazwischen. Vorzugsweise wird die Differenzierung der Lösungen bzgl. ihrer Qualitäten farblich hervorgehoben, um einen Bediener auch innerhalb seiner gewohnten Lage-Darstellung den Lösungsraum mit der zugehörigen Zuverlässigkeit zu visualisieren.

Für die Visualisierung des zukünftigen Erwartungsgebietes 42 werden von der Berechnungseinheit 24 die ermittelten zukünftigen Zielpositionen 25 bereitgestellt. Auch hier können Bereiche entsprechend der Qualitätsmaße Q bzw. $Q_{inv}$ farblich festgelegt werden.

Schließlich wird die beste Zielbahn $Z_{best}$, welche von der Zielbahnberechnungseinheit 30 dem Lösungsraummodul 32 übergeben wird, in dem angezeigtem Lösungsraum hervorgehoben. Dies erfolgt durch einen Startpunkt 44 auf dem ersten Peilstrahl 8 und einen Endpunkt 46 auf dem letzten Peilstrahl 10, wobei die Punkte 44, 46 graphisch hervorgehoben werden. Der zu dieser Zielbahn $Z_{best}$ gehörige Vektor ist als Pfeil mit Pfeilspitze dargestellt, dessen Spitze auf die beste zukünftige Zielposition 25 innerhalb des zukünftigen Erwartungsgebietes 42 zeigt.

Die Darstellung des Lösungsraumes gemäß Fig. 4A zeigt, dass der Entfernungslösungsraum 34 und das zukünftige Erwartungsgebiet 42 noch recht breit sind und das Optimierungsverfahren zum Ermitteln einer besten Lösung der Zielparameter noch nicht richtig konvergiert ist. Die Fig. 4B-D zeigen den Lösungsraum nach weiteren Verfahrenszyklen bzw. Peilmessungen zu späteren Zeitpunkten des Optimierungsverfahrens. Die ermittelte beste Lösung der Zielparameter konvergiert mit zunehmender Zeit gegen die wahre Lösung, so dass sowohl der Entfernungslösungsraum 34 als auch das zukünftige Erwartungsgebiet 42 weiter eingeschränkt werden.

Der in Fig. 4D dargestellte Lösungsraum zeigt dem Bediener eine beste Zielbahn $Z_{best}$ mit einer zu erwartenden Zielposition innerhalb des zukünftigen Erwartungsgebietes 42 an, welche eine hohe Zuverlässigkeit bzw. ein eine hohe Qualität anzeigendes Qualitätsmaß $Q_{inv}$ aufweist.

Eine weitere Möglichkeit, die Unsicherheiten des Lösungsraumes bzw. der zugehörigen Zielparameter zu visualisieren, ist die Darstellung von zusätzlichen Geraden als sog. Rand-Trajektorien.

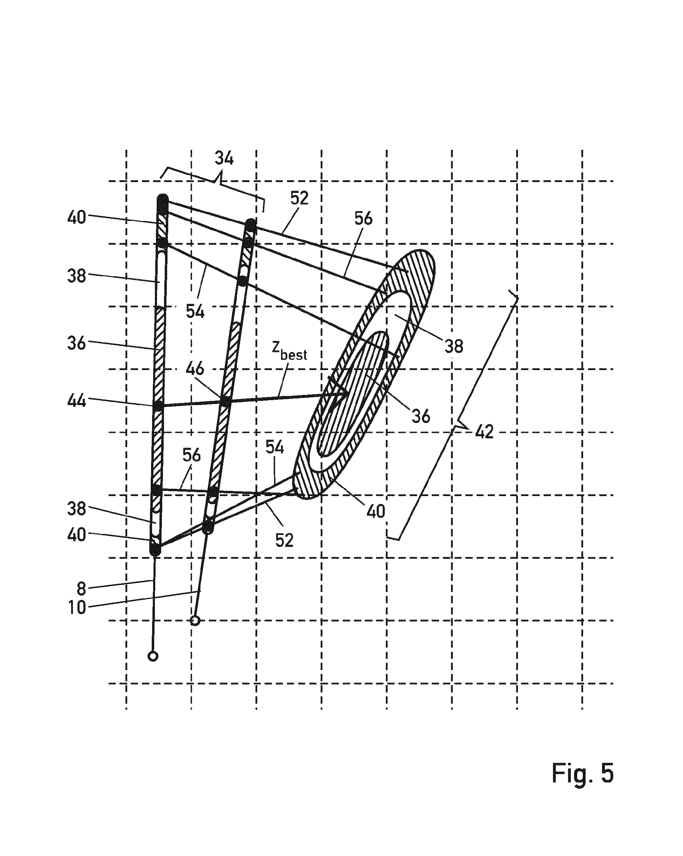

Fig. 5 zeigt eine schematische Darstellung eines Lösungsraumes mit zusätzlich eingezeichneten Rand-Trajektorien. Die Rand-Trajektorien werden anhand der zu bestimmenden Zielparameter in einem Rand-Trajektor-Modul 50 gemäß Fig. 3 festgelegt und dem Lösungsraummodul 32 übergeben. Die entsprechend dem Schwellenwerten im Schwellenwertdetektor 20 gefilterten Werte 22 für die möglichen Zielparameter werden dem Rand-Trajektor-Modul 50 übergeben. Aus diesen Lösungen für $R_0$, $R_n$, C und V werden Extremwerte 48, insbesondere $R_{0min}$, $R_{0max}$, $R_{nmin}$, $R_{nmax}$, $C_{min}$, $C_{max}$ sowie $V_{min}$, $V_{max}$, bestimmt, aus denen die jeweiligen Rand-Trajektorien ermittelt werden.

Fig. 5 zeigt den Lösungsraum aus Fig. 4A mit zusätzlichen Geraden als Rand-Trajektorien für die Extremwerte der Startentfernung, $R_{0min}$ und $R_{0max}$ 52 die Rand-Trajektorien für Kurs, $C_{min}$ und $C_{max}$ 54 sowie die Rand-Trajektorien für die Geschwindigkeit, $V_{min}$ und $V_{max}$, 56 um die Bandbreite der verschiedenen Lösungen besser zu visualisieren.

Vorzugsweise werden diese Rand-Trajektorien 52, 54, 56 nur angezeigt, solange der zugehörige Lösungsraum relativ breit ist, d. h. die Differenz aus Maximal- und Minimalwert eines Zielparameters einen vorbestimmten Wert überschreitet.

Ferner werden die in Rand-Trajektor-Modul 50 ermittelten Extremwerte 48 der zu bestimmenden Zielparameter zusätzlich auf dem Anzeigemittel 27 numerisch angezeigt, da die Lage-Darstellung nicht in jedem Fall die Breite des Lösungsraumes erkennen lässt.

Fig. 3 beinhaltet als weitere Ausgestaltung der Erfindung eine Gegenkursberechnungseinheit 60, um mögliche Gegenkurssituationen dem Bediener umgehend anzuzeigen.

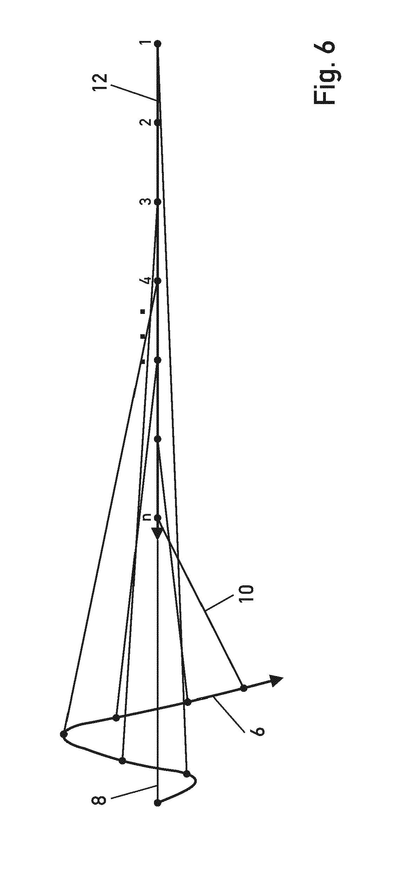

Fig. 6 zeigt eine schematische Darstellung eines möglichen Szenariums einer Gegenkurssituation mit n Peilstrahlen von einem Wasserfahrzeug zu einem Ziel. Das Wasserfahrzeug bewegt sich dabei längs eines Eigenlegs 6 und nimmt n Peilungen zu einem Ziel auf, welches sich unter einem Start-Lagewinkel von Null Grad dem Wasserfahrzeug auf einer Zielbahn 12 nähert.

Die n Peilungen liegen in diesem Fall bei einer Lage-Darstellung gemäß Fig. 6 dicht beieinander. Ein angewandtes Optimierungsverfahren unterscheidet nicht mit ausreichender Zuverlässigkeit, ob sich das Ziel auf einem anlaufenden oder ablaufenden Kurs befindet. Es existieren sowohl der anlaufende Kurs C als auch sein Gegenkurs C + 180 Grad als potentielle Lösung.

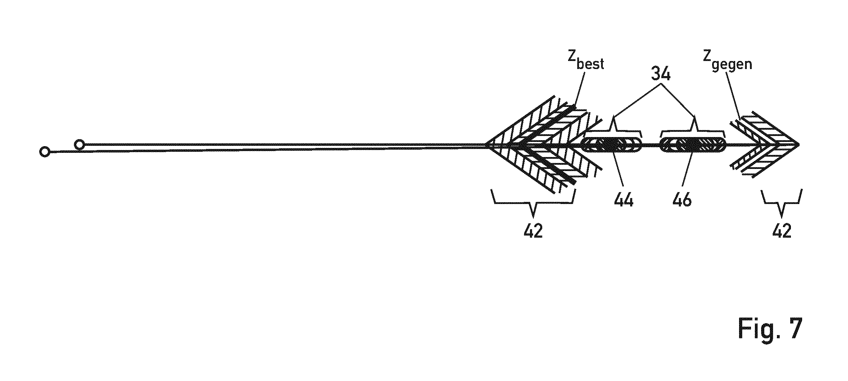

Fig. 7 zeigt eine schematische Darstellung des Lösungsraumes zu der in Fig. 6 dargestellten Gegenkurssituation. Zur Ermittlung des Lösungsraumes wird zunächst mittels der Zielbahnberechnungseinheit 30 eine beste Zielbahn $Z_{best}$ anhand der Qualitätsangaben bestimmt und der zugehörige Kurs $C_{best}$ der Gegenkursberechnungseinheit 60 gemäß dem in Fig. 3 dargestellten Verfahren übergeben. Die Gegenkursberechnungseinheit 60 ermittelt aus dem besten Kurs $C_{best}$ einen Gegenkurs:

$$C_{gegen} = (C_{best} + 180) \bmod 360,$$

wobei die beiden Kurse $C_{best}$ und $C_{gegen}$ dem anlaufenden bzw. ablaufenden Kurs des Zieles entsprechen.

Anhand des Wertes für $C_{gegen}$ wird ein Gegenkursgebiet G1 ermittelt, welches in einem vorbestimmten Winkel X von beiden Seiten den Kurs $C_{gegen}$ umspannt:

$$G1 = \left[ C_{gegen} - X, C_{gegen} + X \right].$$

Anschließend wird mittels der Qualitätsmaße Q(i,j) oder $Q_{inv}$(i, j) eine beste Zielbahn $Z_{gegen}$ bzw. eine beste Gegenkurslösung ermittelt, welche innerhalb des Gegenkursgebietes G1 liegt. Aus der besten Zielbahn $Z_{gegen}$ und der besten Zielbahn $Z_{best}$ wird jeweils ein Vektor zur Darstellung dieser Zielbahnen innerhalb des Lösungsraumes ermittelt. Somit sind gemeinsam $Z_{best}$ und $Z_{gegen}$ in dem Lösungsraum darstellbar, insbesondere farblich oder andersartig unterscheidbar.

Um die Gegenkurssituation weiter zu verdeutlichen sind in Fig. 7 die zukünftigen Zielpositionen 25 als Pfeilspitzen der aus den zugehörigen Zielbahnen Z(i, j) ermittelten Vektoren dargestellt. Diese Darstellung gemäß Fig. 7 verdeutlicht eine Vielzahl möglicher Lösungen mit einem an- und ablaufenden Kurs. Die Pfeilspitzen stellen das zukünftige Erwartungsgebiet 42 dar, welches sich in diesem Fall in zwei Bereiche unterteilt.

Existiert nach weiteren angewandten Verarbeitungszyklen des Optimierungsverfahrens keine Gegenkurslösung mehr, so wird wie eingangs erläutert nur die beste Lösung $Z_{best}$, insbesondere als Pfeil mit Pfeilspitze, in dem Lösungsraum dargestellt.

Da eine Darstellung des Lösungsraumes mit einer Vielzahl von Pfeilspitzen der zukünftigen Zielpositionen 25 nicht immer sinnvoll erscheint, enthält die Erfindung als weitere Ausgestaltung die Ermittlung eines zusätzlichen Gegenkursgebietes G2. Dabei wird das zusätzliche Gegenkursgebiet etwas enger mit einem geringeren Winkel Y<X um den zuvor ermittelten Gegenkurs $C_{gegen}$ ermittelt:

$$G2 = \left[ C_{gegen} - Y, C_{gegen} + Y \right].$$

Somit wird der Lösungsraum lediglich mit einer Vielzahl von Pfeilspitzen für die zukünftigen Zielpositionen 25 auf der Anzeigevorrichtung 27 dargestellt, wenn die ermittelte beste Lösung $Z_{gegen}$ sowohl innerhalb des Gegenkursgebietes G1 als auch innerhalb des zusätzlichen Gegenkursgebietes G2 liegt.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

**Patentansprüche**

1. Verfahren zum Bestimmen und Darstellen von einem Ziel zugeordneten möglichen Zielparametern, insbesondere einer Zielentfernung (R), eines Zielkurses (C) und/oder einer Zielgeschwindigkeit (V), die durch richtungsselektiven Empfang von von dem Ziel abgestrahlten oder gesendeten Schallwellen ermittelt werden, indem mittels einer Anordnung von Wasserschallaufnehmern einer Sonar-Empfangsanlage gemessene Peilwinkel und geschätzte Peilwinkel, die aus geschätzten Positionen des Ziels ermittelt werden, bestimmt werden und eine Peilwinkeldifferenz zwischen gemessenen und geschätzten Peilwinkeln iterativ minimiert wird und bei Erreichen des Minimums die geschätzte Position die Zielparameter einer optimierten Lösung für die Darstellung liefert, und wobei während jedem Verarbeitungszyklus von einer Reihe aufeinanderfolgender Verarbeitungszyklen zu den möglichen Lösungen für die zu bestimmenden Zielparameter eine Vielzahl von unterschiedlichen Zielbahnen ($Z(i, j)$) sowie jeweils eine Qualitätsangabe, insbesondere ein Qualitätsmaß ($Q(i, j)$) oder ein inverses und/oder auf 1 normiertes Qualitätsmaß ($Q_{inv}(i' j)$), zu jeder angenommen Zielbahn ermittelt werden, wobei eine eine beste Lösung angebende beste Zielbahn ($Z_{best}$) anhand der zu den Zielbahnen ($Z(i, j)$) zugehörigen Qualitätsangaben ermittelt wird,
   **dadurch gekennzeichnet, dass**
   eine zukünftige Zielposition (25) des Zieles zu allen oder zu einer Vielzahl von Zielbahnen ($Z(i, j)$) aus den zu der jeweiligen Zielbahn zugehörigen Zielparametern, insbesondere Zielkurs (C) und Zielgeschwindigkeit (V), für einen vorbestimmten Zeitraum ermittelt wird,
   ein zukünftiges Erwartungsgebiet (42) aus den zukünftigen Zielpositionen (25) des Zieles und den zu diesen Zielpositionen (25) zugehörigen Qualitätsangaben ermittelt und auf einer Anzeigevorrichtung (27) dargestellt wird,
   ein die möglichen Lösungen für die Zielentfernung (R) anzeigender Entfernungslösungsraum (34) aus allen oder einer Vielzahl von Zielbahnen ($Z(i, j)$) ermittelt wird, welcher eine zu der jeweiligen Zielbahn zugehörige Anfangsentfernung ($R_0$) und eine Endentfernung ($R_n$) mit der zugehörigen Qualitätsangabe aufweist und
   ein die möglichen Zielparameter beinhaltender Lösungsraum, welcher das zukünftige Erwartungsgebiet (42), den Entfernungslösungsraum (34) und/oder die beste Zielbahn ($Z_{best}$) aufweist, graphisch und/oder numerisch auf der Anzeigevorrichtung (27) dargestellt wird.

2. Verfahren nach Anspruch 1,
   **dadurch gekennzeichnet, dass**
   für die Ermittlung des Lösungsraumes nur diejenigen Zielbahnen ($Z(i, j)$) berücksichtigt werden, deren zugehörige Qualitätsangabe, insbesondere das inverse und/oder normierte Qualitätsmaß ($Q_{inv}(i, j)$), wenigstens einen vorbestimmten Schwellenwert überschritten hat.

3. Verfahren nach Anspruch 1 oder 2,
   **dadurch gekennzeichnet, dass**
   aus den zu den Zielbahnen ($Z(i, j)$) zugehörigen Zielparametern Vektoren ermittelt werden, deren Endpunkte das zukünftige Erwartungsgebiet (42) darstellen, wobei die Startpunkte der Vektoren innerhalb des Entfernungslösungsraumes (34) liegen und die Richtungen und Längen der Vektoren anhand der möglichen Lösungen für Zielkurs (C) und Zielgeschwindigkeit (V) ermittelt werden.

4. Verfahren nach Anspruch 3,
   **dadurch gekennzeichnet, dass**
   aus den zu der besten Zielbahn ($Z_{best}$) zugehörigen Zielparametern ein Vektor ermittelt wird, welcher im Lösungsraum graphisch, insbesondere als Pfeil mit Pfeilspitze, dargestellt wird.

5. Verfahren nach einem der vorhergehenden Ansprüche,
   **dadurch gekennzeichnet, dass**
   Rand-Trajektorien (52, 54, 56) aus vorbestimmten Extremwerten (48) der zu bestimmenden Zielparameter ermittelt werden, welche zum besseren Visualisieren des Lösungsraumes innerhalb des Lösungsraumes als Geraden dargestellt werden.

6. Verfahren nach einem der vorhergehenden Ansprüche,
   **dadurch gekennzeichnet, dass**
   eine potentielle Gegenkurslösung zusätzlich zu der besten Lösung ermittelt wird, wobei die Ermittlung folgende Schritte aufweist:

a) Ermitteln des zur besten Zielbahn ($Z_{best}$) zugehörigen Wertes des Zielkurses ($C_{best}$),

b) Berechnen eines Gegenkurses ($C_{gegen}$) sowie eines den Gegenkurs ($C_{gegen}$) umspannenden Gegenkursgebietes (G1) aus dem ermittelten Wert des Zielkurses ($C_{best}$),

c) Ermitteln einer eine beste Gegenkurslösung angebenden Zielbahn ($Z_{gegen}$) innerhalb des Gegenkursgebietes (G1) sowie eines zu dieser Zielbahn zugehörigen Vektors und

d) graphisches und/oder numerisches Darstellen des Vektors der Zielbahn ($Z_{gegen}$) dieser besten Gegenkurslösung und/oder des Vektors der Zielbahn ($Z_{best}$) innerhalb des Lösungsraumes.

7. Verfahren nach Anspruch 6,
**dadurch gekennzeichnet, dass**
für eine Mehrzahl der Zielbahnen (Z(i, j)) die zukünftigen Zielpositionen (25) innerhalb des zukünftigen Erwartungsgebietes (42) in dem Lösungsraum graphisch und/oder numerisch hervorgehoben werden, insbesondere als Pfeilspitzen, für den Fall, dass eine potentielle Gegenkurslösung ($C_{gegen}$) existiert.

8. Verfahren nach Anspruch 6,
**dadurch gekennzeichnet, dass**
ein zusätzliches Gegenkursgebiet (G2) ermittelt wird für den Fall, dass eine beste Gegenkurslösung ($C_{gegen}$) existiert, wobei das zusätzliche Gegenkursgebiet (G2) kleiner als das zuvor ermittelte Gegenkursgebiet (G1) ist und für eine Mehrzahl der Zielbahnen (Z(i, j)) die zukünftigen Zielpositionen (25) innerhalb des zukünftigen Erwartungsgebietes (42) in dem Lösungsraum graphisch und/oder numerisch hervorgehoben werden, insbesondere als Pfeilspitzen, für den Fall, dass die beste Gegenkurslösung ($C_{gegen}$) innerhalb des zusätzlichen Gegenkursgebietes (G2) liegt.

9. Vorrichtung zur Bestimmung und Darstellung von einem Ziel zugeordneten möglichen Zielparametern, insbesondere einer Zielentfernung, eines Zielkurses und/oder einer Zielgeschwindigkeit, die durch richtungsselektiven Empfang von von dem Ziel abgestrahlten oder gesendeten Schallwellen ermittelbar sind, indem mittels einer Anordnung von Wasserschallaufnehmern einer Sonar-Empfangsanlage gemessene Peilwinkel und geschätzte Peilwinkel, die aus geschätzten Positionen des Ziels ermittelt werden, bestimmt werden und eine Peilwinkeldifferenz zwischen gemessenen und geschätzten Peilwinkeln iterativ minimiert wird und bei Erreichen des Minimums die geschätzte Position die Zielparameter einer optimierten Lösung für die Darstellung liefert, und wobei während jedem Verarbeitungszyklus von einer Reihe aufeinanderfolgender Verarbeitungszyklen zu den möglichen Lösungen für die zu bestimmenden Zielparameter eine Vielzahl von unterschiedlichen Zielbahnen (Z(i, j)) sowie jeweils eine Qualitätsangabe, insbesondere ein Qualitätsmaß (Q(i, j)) oder ein inverses und/oder normiertes Qualitätsmaß ($Q_{inv}$(i' j)), zu jeder angenommen Zielbahn ermittelbar sind, wobei eine eine beste Lösung angebende beste Zielbahn ($Z_{best}$) anhand der zu den Zielbahnen (Z(i, j)) zugehörigen Qualitätsangaben ermittelbar ist,
**gekennzeichnet durch**
eine Berechnungseinheit (24), welche derart ausgestaltet ist, um zu allen oder zu einer Vielzahl von Zielbahnen (Z(i, j)) eine zukünftige Zielposition (25) des Zieles aus den zu der jeweiligen Zielbahn zugehörigen Zielparametern, insbesondere Zielkurs (C) und Zielgeschwindigkeit (V), für einen vorbestimmten Zeitraum zu ermitteln,
eine Darstellungseinheit (26), welche derart ausgestaltet ist, um aus den mittels der Berechnungseinheit (24) ermittelten zukünftigen Zielpositionen (25) und den zu diesen Zielpositionen (25) zugehörigen Qualitätsangaben ein zukünftiges Erwartungsgebiet (42) zu ermitteln und dieses Erwartungsgebiet (42) auf einer Anzeigevorrichtung (27) darzustellen,
eine weitere Berechnungseinheit (28), welche derart ausgestaltet ist, um aus allen oder einer Vielzahl von Zielbahnen (Z(i, j)) einen die möglichen Lösungen für die Zielentfernung (R) anzeigenden Entfernungslösungsraum (34) zu ermitteln, welcher eine zu der jeweiligen Zielbahn zugehörige Anfangsentfernung ($R_0$) und eine Endentfernung ($R_n$) mit der zugehörigen Qualitätsangabe aufweist und
ein Lösungsraummodul (32), welches derart ausgestaltet ist, um einen die möglichen Zielparameter beinhaltenden Lösungsraum zu ermitteln, welcher das zukünftige Erwartungsgebiet (42), den Entfernungslösungsraum (34) und/oder die beste Zielbahn ($Z_{best}$) aufweist, graphisch und/oder numerisch auf der Anzeigevorrichtung (27) darzustellen.

10. Vorrichtung nach Anspruch 9,
**gekennzeichnet durch**
einen Schwellenwertdetektor (20) zur Ermittlung derjenigen Zielbahnen (Z(i, j)), deren zugehörige Qualitätsangaben, insbesondere das inverse und/oder normierte Qualitätsmaß ($Q_{inv}$(i' j)), wenigstens einen vorbestimmten Schwellenwert überschritten haben.

**11.** Vorrichtung nach einem der Ansprüche 9 bis 10,
**gekennzeichnet durch**
Mittel zum Erzeugen von Vektoren aus den zu den Zielbahnen (Z(i, j)) zugehörigen Zielparametern (C, R, V), wobei die Endpunkte der Vektoren das zukünftige Erwartungsgebiet (42) darstellen, die Startpunkte der Vektoren in dem Entfernungslösungsraum (34) liegen und die Richtungen und Längen der Vektoren anhand der möglichen Lösungen für Zielkurs (C) und Zielgeschwindigkeit (V) ermittelbar sind.

**12.** Vorrichtung nach einem der Ansprüche 9 bis 11,
**gekennzeichnet durch**
Mittel zum Erzeugen eines Vektors aus den zu der besten Zielbahn ($Z_{best}$) zugehörigen Zielparametern (C, R, V) und Mittel zum graphischen Darstellen dieses Vektors in dem Lösungsraum, insbesondere als Pfeil mit Pfeilspitze.

**13.** Vorrichtung nach einem der Ansprüche 9 bis 12,
**gekennzeichnet durch**
ein Rand-Trajektor-Modul (50), welches derart ausgestaltet ist, um zu den zu bestimmenden Zielparametern (C, R, V) Rand-Trajektorien (52, 54, 56) zu ermitteln, welche zum besseren Visualisieren des Lösungsraumes innerhalb des Lösungsraumes als Geraden darstellbar sind.

**14.** Vorrichtung nach einem der Ansprüche 9 bis 13,
**gekennzeichnet durch**
eine Gegenkursberechnungseinheit (60) zur Ermittlung und Darstellung einer potentiellen Gegenkurslösung, welche aus einem Gegenkurs ($C_{gegen}$) sowie einem den Gegenkurs ($C_{gegen}$) umspannenden Gegenkursgebiet (G1) ermittelbar ist.

**15.** Vorrichtung nach Anspruch 14,
**dadurch gekennzeichnet, dass**
die Gegenkursberechnungseinheit (60) derart ausgestaltet ist, um ein zusätzliches Gegenkursgebiet (G2) zu ermitteln für den Fall, dass eine beste Gegenkurslösung ($Z_{gegen}$) existiert, wobei das zusätzliche Gegenkursgebiet (G2) kleiner als das zuvor ermittelte Gegenkursgebiet (G1) ist und
das Lösungsraummodul (32) derart ausgestaltet ist, um für eine Mehrzahl der Zielbahnen (Z(i, j)) die zukünftigen Zielpositionen (25) innerhalb des zukünftigen Erwartungsgebietes (42) in dem Lösungsraum graphisch und/oder numerisch hervorzuheben für den Fall, dass die beste Gegenkurslösung ($Z_{gegen}$) innerhalb des zusätzlichen Gegenkursgebietes (G2) liegt.

**Claims**

**1.** A method for determining and depicting of a possible target parameter associated with a target, in particular a target distance (R), a target course (C), and/or a target speed (V), which are determined by directionally-selective receiving of sound waves radiated or sent from the target by determining the bearing angles measured using an assembly of underwater sound pickups of a sonar receiving system, and the estimated bearing angles from estimated positions of the target, and by iteratively minimizing a bearing angle difference between measured and estimated bearing angles and delivering an optimized solution for the depiction upon reaching the minimum of the estimated position of the target parameters, and wherein during each processing cycle of a series of successive processing cycles for the possible solutions for the target parameters to be determined, a plurality of different target paths (Z(i, j)) and a quality specification, in particular a quality metric (Q(i, j)) or an inverse and/or normalized-to-1 quality metric ($Q_{inv}$(i, j)) is respectively determined for each received target path, wherein a best target path ($Z_{best}$) indicating a best solution is determined using the quality specifications associated with the target paths (Z(i, j)),
**characterised in that**
a future target position (25) of the target with respect to all or a plurality of target paths (Z(i, j)) is determined for a predetermined period of time from the target parameters associated with each target path, in particular the target course (C) and target speed (V),
a future anticipation region (42) is determined from the future target positions (25) of the target and the quality specifications associated with these target positions (25) and depicted on a display device (27),
a distance solution space (34) showing the possible solutions for the target distance (R) is determined from all or a plurality of target paths (Z(i, j)), which distance solution space (34) includes an initial distance ($R_0$) associated with the respective target path and a final distance ($R_n$) having the associated quality specification and
a solution space containing the possible target parameters, which includes the future anticipation region (42), the distance solution space (34), and/or the best target path ($Z_{best}$), graphically and/or numerically displayed on the display device (27).

2. The method according to claim 1,
   **characterised in that**
   for the determining of the solution space only those target paths ($Z(i, j)$) are considered, the associated quality specifications of which target paths, in particular the inverse and/or normalized quality metric ($Q_{inv}(i, j)$), has exceeded at least one predetermined threshold.

3. The method according to claim 1 or 2,
   **characterised in that**
   vectors are determined from the target parameters associated with the target paths ($Z(i, j)$), the end points of which vectors represent the future anticipation region (42), wherein the start points of the vectors fall inside the distance solution space (34) and the directions and lengths of the vectors are determined using the possible solutions for target course (C) and target speed (V).

4. The method according to claim 3,
   **characterised in that**
   a vector is determined from the target parameters associated with the best target path ($Z_{best}$), which vector is depicted graphically in the solution space, in particular as an arrow including an arrowhead.

5. The method according to one of the preceding claims,
   **characterised in that**
   edge trajectories (52, 54, 56) are determined from predetermined extreme values (48) of the target parameters to be determined, which edge trajectories are depicted inside the solution space as straight lines for better visualization of the solution space.

6. The method according to one of the preceding claims,
   **characterised in that**
   a potential counter-course solution is determined in addition to the best solution, wherein the determining includes the following steps:

   a) determining the value of the target course ($C_{best}$) associated with the best target path ($Z_{best}$),
   b) calculating from the determined value of the target course ($C_{best}$) a counter-course ($C_{counter}$) and a counter-course region (G1) spanning the counter-course ($C_{counter}$),
   c) determining a target path ($Z_{counter}$) specifying a best counter-course solution inside the counter-course region (G1) and a vector associated with this target path
   and
   d) graphical and or numerical displaying of the vector of the target path ($Z_{counter}$) of this best counter-course solution and/or of the vector of the target path ($Z_{best}$) inside the solution space.

7. The method according to claim 6,
   **characterised in that**
   for a plurality of the target paths ($Z(i, j)$) the future target positions (25) inside the future anticipation region (42) in the solution space are graphically and/or numerically emphasized, in particular as arrowheads, for the case that a potential counter-course solution ($C_{counter}$) exists.

8. The method according to claim 6,
   **characterised in that**
   an additional counter-course region (G2) is determined for the case that a best counter-course solution ($C_{counter}$) exists, wherein the additional counter-course region (G2) is smaller than the previously determined counter-course region (G1), and
   for a plurality of the target paths ($Z(i, j)$) the future target positions (25) inside the future anticipation region (42) in the solution space are graphically and/or numerically emphasized, in particular as arrowheads, for the case that the best counter-course solution ($C_{counter}$) falls inside the additional counter-course region (G2).

9. A device for determining and depicting of a possible target parameter associated with a target, in particular a target distance, a target course, and/or a target speed, which are determinable by directionally-selective receiving of sound waves radiated or sent from the target by determining the bearing angles measured using an assembly of underwater sound pickups of a sonar receiving system, and the estimated bearing angles from estimated positions of the target, and by iteratively minimizing a bearing angle difference between measured and estimated bearing angles and delivering an optimized solution for the depiction upon reaching the minimum of the estimated position of the target parameter, and wherein during each processing cycle of a series of successive processing cycles for the possible solutions for the target parameters to be determined, a plurality of different target paths ($Z(i, j)$) and a quality specification, in particular a quality metric ($Q(i, j)$) or an inverse and/or normalized-to-1 quality metric ($Q_{inv}(i, j)$) is respectively determined for each received target path, wherein a best target path ($Z_{best}$) indicating a best solution is determined using the quality specifications associated with the target paths ($Z(i, j)$),

**characterised by**

a calculating unit (24) which is designed to determine for a predetermined time period for all or for a plurality of target paths ($Z(i, j)$) a future target position (25) of the target from the target parameters associated with the respective target path, in particular target course (C) and target speed (V),

a display unit (26), which is designed to determine a future anticipation region (42) from the future target positions (25) determined using the calculating unit (24) and the quality specifications associated with these target positions (25) and to display this anticipation region (42) on a display device (27),

a further calculating unit (28), which is designed to determine, from all or a plurality of target paths ($Z(i, j)$) a distance solution space (34) showing the possible solutions for the target distance (R), which distance solution space (34) includes an initial distance ($R_0$) associated with the respective target path and a final distance ($R_n$) having the associated quality specification and

a solution space module (32) which is designed to determine a solution space containing the possible target parameters, which solution space includes the future anticipation region (42), the distance solution space (34), and/or the best target path ($Z_{best}$), to graphically and/or numerically display on the display device (27).

10. The device according to claim 9,
**characterised by**
a threshold value detector (20) for determining those target paths ($Z(i, j)$) whose associated quality specifications, in particular the inverse and/or normalized quality metric ($Q_{inv}(i, j)$), have exceeded at least one predetermined threshold value.

11. The device according to one of claims 9 to 10,
**characterised by**
means for generating vectors from the target parameters (C, R, V) associated with the target paths ($Z(i, j)$), wherein the end points of the vectors represent the future anticipation region (42), the start points of the vectors fall in the distance solution space (34), and the directions and lengths of the vectors are determinable using the possible solutions for target course (C) and target speed (V).

12. The device according to one of claims 9 to 11,
**characterised by**
means for generating a vector from the target parameters (C, R, V) associated with the best target path ($Z_{best}$) and means for graphically depicting this vector in the solution space, in particular as an arrow including an arrowhead.

13. The device according to one of claims 9 to 12,
**characterized by**
an edge-trajectory module (50), which is designed so as to determine edge trajectories (52, 54, 56) for the to-be-determined target parameters (C, R, V), which edge trajectories (52, 54, 56) are depictable as straight lines inside the solution space for better visualizing of the solution space.

14. The device according to one of claims 9 to 13,
**characterised by**
a counter-course calculating unit (60) for determining and depicting a potential counter-course solution, which is determinable from a counter-course ($C_{counter}$) and a counter-course region (G1) spanning the counter-course ($C_{counter}$).

15. The device according to claim 14,
**characterised in that**
the counter-course calculating unit (60) is designed so as to determine an additional counter-course region (G2) for the case that a best counter-course solution ($C_{counter}$) exists, wherein the additional counter-course region (G2) is smaller than the previously determined counter-course region (G1), and
the solution space module (32) is designed so as to graphically and/or numerically emphasize, for a plurality of target paths (Z(i, j)), the future target positions (25) inside the future anticipation region (42) in the solution space for the case that the best counter-course solution ($C_{counter}$) falls inside the additional counter-course region (G2).

**Revendications**

1.  Procédé de détermination et de représentation de paramètres possibles de cible associés à une cible, en particulier d'une distance de la cible (R), d'un cap de la cible (C) et/ou d'une vitesse de la cible (V), qui sont déterminés par une réception sélective en fonction de la direction d'ondes acoustiques émises ou envoyées par la cible, en ce que, au moyen d'un agencement d'hydrophones d'une installation de réception sonar, des angles de relèvement mesurés et des angles de relèvement estimés, qui sont déterminés à partir de positions estimées de la cible, sont déterminés et une différence d'angle de relèvement entre des angles de relèvement mesurés et estimés est minimisée par itération et lorsque le minimum est atteint, la position estimée livre les paramètres de cible d'une solution optimisée pour la représentation, et dans lequel pendant chaque cycle de traitement d'une série de cycles de traitement successifs pour les solutions possibles pour les paramètres de cible à déterminer, une pluralité de trajectoires de cible (Z(i, j)) différentes ainsi qu'une indication de qualité respective, en particulier une mesure de qualité (Q(i, j)) ou une mesure de qualité inverse et/ou normalisée à 1 ($Q_{inv}$(i, j)) sont déterminées pour chaque trajectoire de cible supposée, une meilleure trajectoire de cible ($Z_{best}$) indiquant une meilleure solution étant déterminée à l'aide des indications de qualité associées aux trajectoires de cible (Z(i, j)),
    **caractérisé en ce que**
    une position de cible future (25) de la cible est déterminée pour toutes les ou pour une pluralité de trajectoires de cible (Z(i, j)) à partir des paramètres de cible associés à la trajectoire de cible respective, en particulier le cap de la cible (C) et la vitesse de la cible (V), pour une période prédéfinie,
    une zone d'attente future (42) est déterminée à partir des positions de cible futures (25) de la cible et des indications de qualité associées à ces positions de cible (25), et représentée sur un dispositif d'affichage (27),
    un espace de solutions pour la distance (34) indiquant les solutions possibles pour la distance de la cible (R) est déterminé à partir de toutes les ou d'une pluralité de trajectoires de cible (Z(i, j)), qui comporte une distance initiale ($R_0$) associée à la trajectoire de cible respective et une distance finale ($R_n$) avec l'indication de qualité associée et un espace de solutions contenant les paramètres possibles de cible, qui comporte la zone d'attente future (42), l'espace de solutions pour la distance (34) et/ou la meilleure trajectoire de cible ($Z_{best}$), est représenté graphiquement et/ou numériquement sur le dispositif d'affichage (27).

2.  Procédé selon la revendication 1,
    **caractérisé en ce que**
    pour la détermination de l'espace de solutions, seules les trajectoires de cible (Z(i, j)) dont l'indication de qualité associée, en particulier la mesure de qualité inverse et/ou normalisé ($Q_{inv}$(i, j)), a dépassé au moins une valeur seuil prédéfinie.

3.  Procédé selon la revendication 1 ou 2,
    **caractérisé en ce qu'**
    à partir des paramètres de cible associés aux trajectoires de cible (Z(i, j)), des vecteurs dont les points d'arrivée représentent la zone d'attente future (42) sont déterminés, les points de départ des vecteurs se situant à l'intérieur de l'espace de solutions pour la distance (34) et les directions et les longueurs des vecteurs étant déterminées à l'aide des solutions possibles pour le cap de la cible (C) et la vitesse de la cible (V).

4.  Procédé selon la revendication 3,
    **caractérisé en ce qu'**
    un vecteur est déterminé à partir des paramètres de cible associés à la meilleure trajectoire de cible ($Z_{best}$), lequel vecteur est représenté graphiquement dans l'espace de solutions, en particulier sous la forme d'une flèche dotée d'une pointe de flèche.

5.  Procédé selon l'une des revendications précédentes,
    **caractérisé en ce qu'**
    à partir de valeurs extrêmes prédéfinies (48) des paramètres de cible à déterminer, des trajectoires de bord (52, 54, 56) sont déterminées, qui sont représentées sous la forme de droites à l'intérieur de l'espace de solutions pour une meilleure visualisation de l'espace de solutions.

**6.** Procédé selon l'une des revendications précédentes,
**caractérisé en ce qu'**
une solution potentielle de cap opposé est déterminée en plus de la meilleure solution, la détermination comportant les étapes consistant à :

a) déterminer la valeur du cap de la cible ($C_{best}$) associée à la meilleure trajectoire de cible ($Z_{best}$),
b) calculer un cap opposé ($C_{gegen}$) ainsi qu'une zone de cap opposé (G1) embrassant le cap opposé ($C_{gegen}$) à partir de la valeur déterminée du cap de la cible ($C_{best}$),
c) déterminer une trajectoire de cible ($Z_{gegen}$) indiquant une meilleure solution de cap opposé à l'intérieur de la zone de cap opposé (G1) ainsi qu'un vecteur associé à cette trajectoire de cible et
d) représenter graphiquement et/ou numériquement le vecteur de la trajectoire de cible ($Z_{gegen}$) de cette meilleure solution de cap opposé et/ou le vecteur de la trajectoire de cible ($Z_{best}$) à l'intérieur de l'espace de solutions.

**7.** Procédé selon la revendication 6,
**caractérisé en ce que,**
pour plusieurs des trajectoires de cible ($Z(i, j)$), les positions de cible futures (25) sont mises en évidence graphiquement et/ou numériquement à l'intérieur de la zone d'attente future (42) dans l'espace de solutions, en particulier sous la forme de pointes de flèche, pour le cas où une solution potentielle de cap opposé ($C_{gegen}$) existe.

**8.** Procédé selon la revendication 6,
**caractérisé en ce qu'**
une zone de cap opposé supplémentaire (G2) est déterminée pour le cas où une meilleure solution de cap opposé ($C_{gegen}$) existe, la zone de cap opposé supplémentaire (G2) étant plus petite que la zone de cap opposé (G1) déterminée auparavant et
pour plusieurs des trajectoires de cible ($Z(i, j)$), les positions de cible futures (25) sont mises en évidence graphiquement et/ou numériquement à l'intérieur de la zone d'attente future (42) dans l'espace de solutions, en particulier sous la forme de pointes de flèche, pour le cas où la meilleure solution de cap opposé ($C_{gegen}$) se situe à l'intérieur de la zone de cap opposé supplémentaire (G2).

**9.** Dispositif de détermination et de représentation de paramètres possibles de cible associés à une cible, en particulier d'une distance de la cible, d'un cap de la cible et/ou d'une vitesse de la cible, qui peuvent être déterminés par une réception sélective en fonction de la direction d'ondes acoustiques émises ou envoyées par la cible, en ce que, au moyen d'un agencement d'hydrophones d'une installation de réception sonar, des angles de relèvement mesurés et des angles de relèvement estimés, qui sont déterminés à partir de positions estimées de la cible, sont déterminés et une différence d'angle de relèvement entre des angles de relèvement mesurés et estimés est minimisée par itération et lorsque le minimum est atteint, la position estimée livre les paramètres de cible d'une solution optimisée pour la représentation, et dans lequel pendant chaque cycle de traitement d'une série de cycles de traitement successifs pour les solutions possibles pour les paramètres de cible à déterminer, une pluralité de trajectoires de cible ($Z(i, j)$) différentes ainsi qu'une indication de qualité respective, en particulier une mesure de qualité ($Q(i, j)$) ou une mesure de qualité inverse et/ou normalisée ($Q_{inv}(i, j)$) peuvent être déterminées pour chaque trajectoire de cible supposée, une meilleure trajectoire de cible ($Z_{best}$) indiquant une meilleure solution pouvant être déterminée à l'aide des indications de qualité associées aux trajectoires de cible ($Z(i, j)$),
**caractérisé par**
une unité de calcul (24), qui est conçue de façon à déterminer une position de cible future (25) de la cible pour toutes les ou pour une pluralité de trajectoires de cible ($Z(i, j)$) à partir des paramètres de cible associés à la trajectoire de cible respective, en particulier le cap de la cible (C) et la vitesse de la cible (V), pour une période prédéfinie,
une unité de représentation (26), qui est conçue de façon à déterminer, à partir des positions de cible futures (25) déterminées au moyen de l'unité de calcul (24) et des indications de qualité associées à ces positions de cible (25), une zone d'attente future (42) et à représenter cette zone d'attente (42) sur un dispositif d'affichage (27),
une autre unité de calcul (28), qui est conçue de façon à déterminer, à partir de toutes les ou d'une pluralité de trajectoires de cible ($Z(i, j)$), un espace de solutions pour la distance (34) indiquant les solutions possibles pour la distance de la cible (R), qui comporte une distance initiale ($R_0$) associée à la trajectoire de cible respective et une distance finale ($R_n$) avec l'indication de qualité associée et
un module d'espace de solutions (32), qui est conçu de façon à déterminer un espace de solutions contenant les paramètres possibles de cible, qui comporte la zone d'attente future (42), l'espace de solutions pour la distance (34) et/ou la meilleure trajectoire de cible ($Z_{best}$), et le représenter graphiquement et/ou numériquement sur le dispositif d'affichage (27).

**10.** Dispositif selon la revendication 9,
**caractérisé par**
un détecteur de valeur seuil (20) destiné à déterminer les trajectoires de cible (Z(i, j)) dont les indications de qualité associées, en particulier la mesure de qualité inverse et/ou normalisée ($Q_{inv}$(i, j)), ont dépassé au moins une valeur seuil prédéfinie.

**11.** Dispositif selon l'une des revendications 9 à 10,
**caractérisé par**
des moyens destinés à générer des vecteurs à partir des paramètres de cible (C, R, V) associés aux trajectoires de cible (Z(i, j)), les points d'arrivée des vecteurs représentant la zone d'attente future (42), les points de départ des vecteurs se situant dans l'espace de solutions pour la distance (34) et les directions et les longueurs des vecteurs pouvant être déterminées à l'aide des solutions possibles pour le cap de la cible (C) et la vitesse de la cible (V).

**12.** Dispositif selon l'une des revendications 9 à 11,
**caractérisé par**
des moyens destinés à générer un vecteur à partir des paramètres de cible (C, R, V) associés à la meilleure trajectoire de cible ($Z_{best}$) et
des moyens destinés à la représentation graphique de ce vecteur dans l'espace de solutions, en particulier sous la forme d'une flèche dotée d'une pointe de flèche.

**13.** Dispositif selon l'une des revendications 9 à 12,
**caractérisé par**
un module de trajectoire de bord (50), qui est conçu de façon à déterminer pour les paramètres de cible (C, R, V) à déterminer des trajectoires de bord (52, 54, 56), qui peuvent être représentées sous la forme de droites à l'intérieur de l'espace de solutions pour une meilleure visualisation de l'espace de solutions.

**14.** Dispositif selon l'une des revendications 9 à 13,
**caractérisé par**
une unité de calcul de cap opposé (60) destinée à déterminer et représenter une solution potentielle de cap opposé qui peut être déterminée à partir d'un cap opposé ($C_{gegen}$) ainsi que d'une zone de cap opposé (G1) embrassant le cap opposé ($C_{gegen}$).

**15.** Dispositif selon la revendication 14,
**caractérisé en ce que**
l'unité de calcul de cap opposé (60) est conçue de façon à déterminer une zone de cap opposé supplémentaire (G2) pour le cas où une meilleure solution de cap opposé ($C_{gegen}$) existe, la zone de cap opposé supplémentaire (G2) étant plus petite que la zone de cap opposé (G1) déterminée auparavant et
le module d'espace de solutions (32) est conçu de façon à mettre en évidence graphiquement et/ou numériquement les positions de cible futures (25) à l'intérieur de la zone d'attente future (42) dans l'espace de solutions pour plusieurs des trajectoires de cible (Z(i, j)) pour le cas où la meilleure solution de cap opposé ($C_{gegen}$) se situe à l'intérieur de la zone de cap opposé supplémentaire (G2).

Fig. 1

Fig. 2

Fig. 3

Fig. 4

EP 2 699 935 B1

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10129726 A1
- DE 10352738 A1
- DE 102008030053 A1
- WO 2009156337 A1
- US 7020046 B